# EUROPEAN PATENT SPECIFICATION

(11) **EP 3 012 883 B1**
(45) Date of publication and mention of the grant of the patent: **18.04.2018**
(21) Application number: 14189806.4
(22) Date of filing: 21.10.2014
(51) Int. Cl.: H01M 2/10, E05B 35/00, E05C 19/06

(54) **Locking mechanism and openable container comprising the same**
Verriegelungsmechanismus und zu öffnender Behälter damit
Mécanisme de verrouillage et conteneur ouvrable comprenant celui-ci

(43) Date of publication of application: 27.04.2016
(73) Proprietor: Home Control Singapore Pte. Ltd., Singapore 556741 (SG)
(72) Inventor: JIANG, Long, Minhang District Shanghai 200233 (TH)
(74) Representative: Ferreccio, Rinaldo

(56) References cited:
- WO-A1-2007/069552
- DE-A1- 4 234 962
- FR-A1- 2 945 591

## Description

### FIELD OF THE INVENTION

This invention relates to a locking mechanism and openable containers comprising the same, for example battery containers openable for replacing a battery and electric appliances comprising the battery containers.

### BACKGROUND OF THE INVENTION

Many house hold electric appliances utilize batteries as power supply. One example is remote controllers. Usually, the remote controllers are desired to be small and light, so in many situations button batteries are used. However, these button batteries are too small. Sometimes kids swallow them when putting them into their mouths, which will be very dangerous.

As a result, a safety structure is used for holding batteries, especially button batteries, which comprises a special locking mechanism preventing kids from opening the battery case. There are various ways to provide such a safety mechanism. In one example, the cover of the battery case can only be unlocked by a special tool, like a pin. By this special structure, the safety for kids can be significantly improved.

The same safety structure can also be used for other openable containers, like containers for pills or screws.

An assembling and disassembling device for mechanical parts, in particular battery compartments, is known for instance from the French Patent Application published under No. FR 2 945 591.

### SUMMARY OF THE INVENTION

However, it was found later that these locking mechanisms are sometimes too "good". Even some adults cannot open the battery cases or screw cases easily. Still take the "pin" mechanism as an example, in many existing designs, the user needs to use one hand to insert the pin into a small hole and press it down to unlock the cover, and meanwhile use another hand to remove the cover. This is not easy, especially considering the fact that usually the resistance force for unlocking should be strong enough to prevent kids from operating.

It is an object of this invention to provide an improved structure. The invention is defined by the independent claim. The dependent claims define advantageous embodiments.

According to an aspect of the invention, there is provided a locking mechanism for an openable container, which comprises a first locking member and a second locking member. They are respectively arranged on the main body and on the cover of the openable container. Furthermore, the second locking member comprises a first holding element to hold the first locking member in a lock position, and a second holding element to hold the first locking member in a release position. By this structure, the container can be both closed and opened easily. Once the first locking member has been brought into the release position, the container can easily be opened without there being a need for the user to continuously keep the first locking member into a state in which the container can be opened as the second holding element will do so. The mechanism also comprises a release mechanism, which can move the first locking member from the lock position to the release position. This provides a simple structure to release the lock and meanwhile utilize the second holding element, so the structure can be more compact.

The first holding element of the second locking member may comprise a stop surface, which abuts on another corresponding stop surface on the first locking member to lock the cover.

The second holding element of the second locking member comprises one or more holding arms, which can hold the sides of the first locking member to make it in the release position.

The first locking member comprises a cantilever attached to the main body, whose natural position is the locking position.

The second locking member may comprise a wedge surface, which can cooperate with another corresponding wedge surface on the cantilever to make the cantilever deform from the natural position.

The release mechanism comprises a pressing surface on the cantilever, which can make the cantilever deform from the natural position when applied by a pressure.

The release mechanism comprises a through hole in the corresponding position to the pressing surface on the second locking member.

According to another aspect of the invention, there is provided an openable battery container, which comprises the locking mechanism described before and further comprises a main body comprising an open space for containing a battery and a cover suitable to close the open space. However, it is easy to be envisaged that this locking mechanism can also be used in other containers, like pills or screws containers.

This battery container can be used in many electric appliances, like a remote controller.

### BRIEF DESCRIPTION OF THE DRAWINGS

Examples of the invention will now be described in details with reference to the accompanying drawings, in which:
Fig. 1 shows a battery container comprising the locking mechanism of the invention in perspective view;
Fig. 2 shows the locking mechanism of the battery container of Fig. 1 with other parts removed;
Fig. 3 shows the locking mechanism of Fig. 2 from the bottom;
Fig. 4 shows the second locking member of the locking mechanism of Fig. 3 with the first locking member removed;
Fig. 5 shows the first locking member of the locking mechanism of Fig. 2 with the second locking member removed;
Fig. 6(a) - (c) show the lock action of the locking mechanism of Fig. 2 in cross section view; and
Fig. 7(a) - (c) show the release action of the locking mechanism of Fig. 2 in cross section view.

### DETAILED DESCRIPTION OF THE EMBODIMENTS

Details of the preferable embodiments will now be described with reference to the drawings, which show the invention applied to a remote controller having an openable battery container. The same battery container can however be applied to other electric appliances, and the same locking mechanism can be applied to other openable containers.

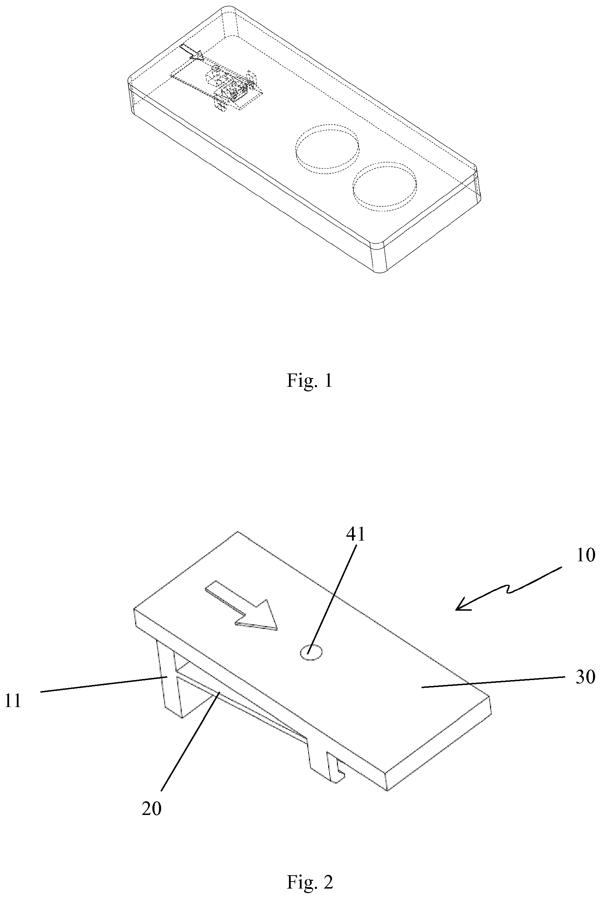

Fig. 1 shows an example of a remote controller using the locking mechanism according to this invention, in perspective view.

The remote controller comprises a main body and a cover to cooperate with it. The main body comprises an open space, wherein two button batteries are arranged to supply power. The cover can be fitted on the main body to open or close the opening space. A locking mechanism according to this invention is used to lock or release the cover. After sliding along the arrow, the locking mechanism can subsequently be released (in a manner to be described hereinbelow) so that the cover can be removed.

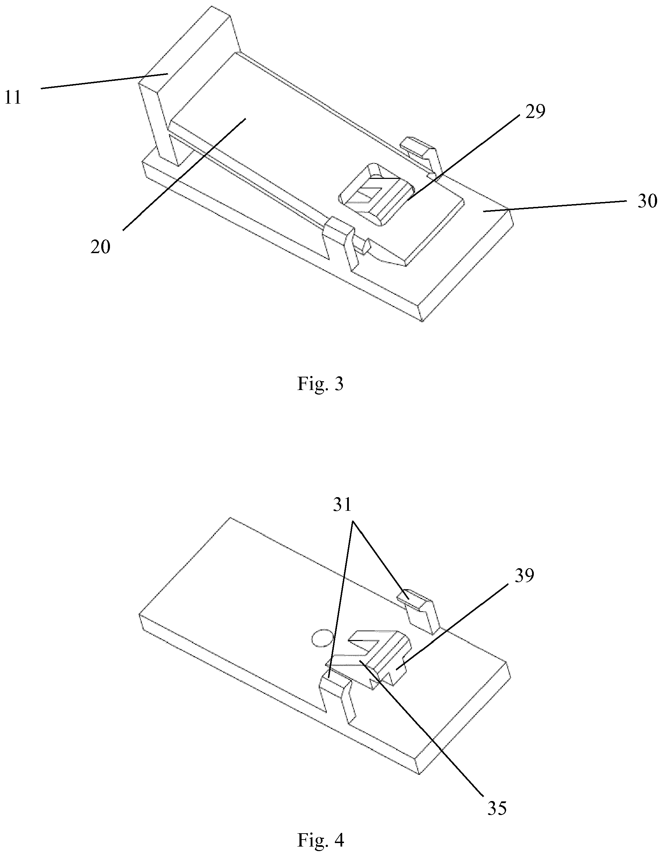

Figs. 2 and 3 show the locking mechanism 10 of the battery container with other parts removed. The locking mechanism 10 comprises a first locking member 20 and a second locking member 30.

The first locking member 20 is in the form of a cantilever made from elastic materials such as plastics or metal, or any other materials which provide a good rigidity to lock the cover but can also deform away from the natural position under pressure. The root end is connected to a side wall 11 of the main body. It can be envisaged that in other embodiments the locking member 20 can also be detachable from the main body.

The second locking member 30 for example is a piece of metal or plastic or other elastic materials, which can form a part of the cover or be a separate element. On the bottom surface, i.e. the surface opposite to the button batteries, there are a wedge-shaped protuberance and two arms 31. The wedge-shape protuberance includes a stop surface 39 and a wedge surface 35, which could respectively cooperate with the corresponding stop surface 29 and wedge surface 25 on the cantilever 20 to lock the cover or to bias the cantilever 20. The arms 31 can hold the both sides of the cantilever 20 to hold it in a release position biased from its natural position.

On the top side of the cantilever 20, there is also another protuberance which comprises a pressing surface 42. In the opposite position of the second locking member 30, a through hole 41 is arranged. This pressing surface 42 and the through hole 41 constitute the release mechanism in this embodiment. A special pin 60 can be inserted through the hole 41 to apply a pressure on the pressing surface 42, to bias it from the locking position.

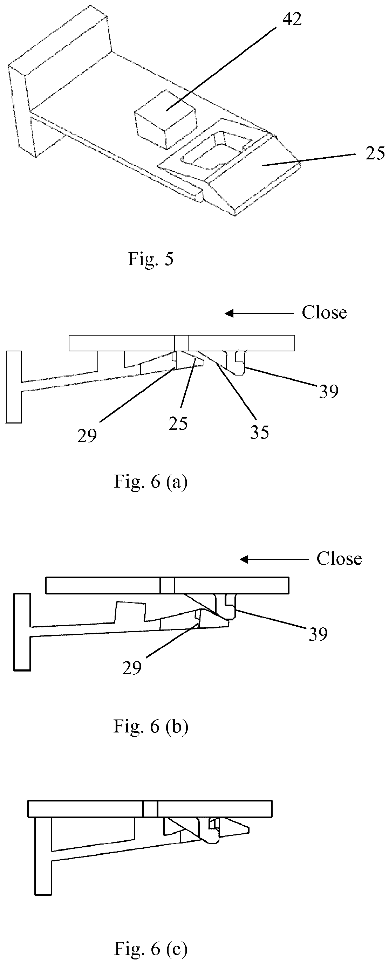

Figs. 6(a)-(c) show the locking action of the lock mechanism. During the locking action, the user pushes the second locking member 30 along the tracks (not shown) to the left of the drawing. In the first stage of free travel, the second locking member 30 does not touch the cantilever 20 as shown in Fig. 6(a). Later, after the wedge surface 35 touches the corresponding wedge surface 25 on the cantilever 20, the wedge surface 35 applies a pressure on the wedge surface 25 with the sliding of the second locking member continues. The cantilever 20 is biased downwards from its natural position. In the end of the sliding, the wedge surface 35 moves over the wedge surface 25, and the biasing pressure disappears. The cantilever 20 will return to its natural position. Now as shown in Fig. 6(c), the stop surfaces 29, 39 are abutting each other and prevent the second locking member 30 from sliding to the right to open the battery container. As a result, the cover is locked.

It should be noted that, in this embodiment the height of the wedge surface 35 is specially designed, which ensures the biased cantilever 20 will never reach the holding arms 31 during the above locking action.

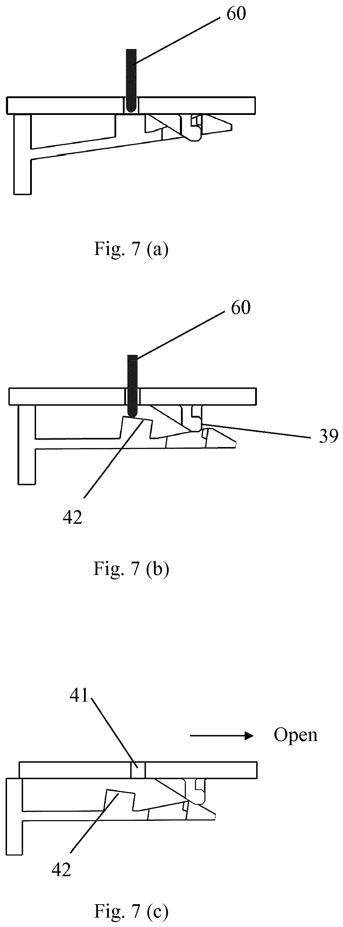

Figs. 7(a)-(c) show the release action of the lock mechanism. During the release action, the user first needs to insert a pin 60 into the hole 41. The lower end of the pin passes through the hole 41 and abuts on the pressing surface 42. With the applied force increased by the user, the pin 41 overcomes the elastic force of the cantilever 20 and pushes it downwards. By this, the stop surface 29 leaves from the stop surface 39 and the cover is unlocked. Now, the user could further increase the applied force. The cantilever 20 will be further biased downwards and push the holding arms 31 (not illustrated in Figs 7(a)-(c) for the sake of clarity) to deform. After a "click" sound, the two sides of the cantilever 20 has moved over the holding arms 31, and now the cantilever 20 is held by the holding arms 31 from returning back to the natural position, as shown in Fig. 7(b).

As a result, now the pin 60 can be removed and the cantilever 20 still stays in the release position. The user can easily remove the cover. With the sliding of the second locking member 30 to the right, the holding arms 31 leave the held two sides of the cantilever 20 and the cantilever 20 returns to its original place.

## Claims

1. An openable container, comprising:
a main body;
a cover;
a locking mechanism (10) comprising:
a first locking member (20) arranged on the main body of the openable container, which includes a cantilever attached to the main body, whose natural position is a lock position and
a second locking member (30) arranged on the cover of the openable container which includes a first holding element (39) to hold the first locking member (20) in a lock position, and a second holding element (31) to hold the first locking member (20) in a release position, and
a release mechanism (41, 42) suitable for moving the first locking member (20) from the lock position to the release position and comprising:
a) a pressing surface (42) on the cantilever, suitable for making the cantilever deform from the natural position when a pressure is applied; and
b) a through hole (41) on the second locking member (30) which faces the pressing surface (42)
**characterised in that** the second holding element (31) of the second locking member (30) of the locking mechanism (10) comprises a holding arm.

2. The openable container as claimed in claim 1, wherein the first holding element (39) comprises a stop surface, which is suitable for abutting on another corresponding stop surface (29) on the first locking member (20) to lock the cover.

3. The openable container as claimed in claim 1, wherein the second locking member (30) comprises a wedge surface (35), which is suitable for cooperating with another corresponding wedge surface (25) on the cantilever to make the cantilever deform from the natural position.

4. An electric appliance comprising the openable container as claimed in any one of the preceding claims.

## Patentansprüche

1. Ein Behälter, der geöffnet werden kann, umfassend:
einen Grundkörper;
eine Abdeckung;
einen Verriegelungsmechanismus (10) mit:
einem an dem Grundkörper des Behälters, der geöffnet werden kann, angeordnetes erstes Verriegelungselement (20), das einen an dem Grundkörper angebrachten Ausleger umfasst, dessen natürliche Position eine Verriegelungsposition ist, und
einem an der Abdeckung des Behälters, der geöffnet werden kann, angeordnetes zweites Verriegelungselement (30), das ein erstes Halteelement (39) zum Halten des ersten Verriegelungselements (20) in einer Verriegelungsposition und ein zweites Halteelement (31) umfasst, um das erste Verriegelungselement (20) in einer Freigabestellung zu halten, und
einem Freigabemechanismus (41, 42), der geeignet ist, das erste Verriegelungselement (20) aus der Verriegelungsposition in die Freigabestellung zu bewegen, und aufweist:
a) eine Pressfläche (42) am Ausleger, die geeignet ist, den Ausleger aus der natürlichen Position zu verformen, wenn ein Druck angelegt wird; und
b) ein Durchgangsloch (41) an dem zweiten Verriegelungselement (30), das der Pressfläche (42) gegenüberliegt,
**dadurch gekennzeichnet, dass** das zweite Halteelement (31) des zweiten Verriegelungselements (30) des Verriegelungsmechanismus (10) einen Haltearm aufweist.

2. Behälter, der geöffnet werden kann, nach Anspruch 1, wobei das erste Halteelement (39) eine Anschlagfläche aufweist, die geeignet ist, an einer anderen korrespondierenden Anschlagfläche (29) an dem ersten Verriegelungselement (20) zum Verriegeln des Deckels anzuliegen.

3. Behälter, der geöffnet werden kann, nach Anspruch 1, wobei das zweite Verriegelungselement (30) eine Keilfläche (35) aufweist, die geeignet ist, mit einer anderen korrespondierenden Keilfläche (25) an dem Ausleger zusammenzuwirken, um den Ausleger aus der natürlichen Position zu verformen.

4. Elektrisches Gerät mit dem Behälter, der geöffnet werden kann, nach einem der vorhergehenden Ansprüche.

## Revendications

1. Un contenant apte à être ouvert, comprenant :
un corps principal ;
un couvercle ;
un mécanisme de verrouillage (10) comprenant :
un premier organe de verrouillage (20) agencé sur le corps principal du conteneur apte à être ouvert, lequel comprend un cantilever fixé au corps principal, dont la position naturelle est une position de verrouillage et
un deuxième organe de verrouillage (30) agencé sur le couvercle du conteneur apte à être ouvert, qui comprend un premier élément de retenue (39) pour maintenir le premier organe de verrouillage (20) dans une position de verrouillage, et un deuxième élément de retenue (31) pour maintenir le premier un organe de verrouillage (20) dans une position de libération, et
un mécanisme de libération (41, 42) approprié pour déplacer le premier organe de verrouillage (20) de la position de verrouillage à la position de libération et comprenant :
a) une surface (42) de pression sur le cantilever, appropriée pour amener le cantilever à être déformé à partir de la position naturelle lorsqu'une pression est appliquée ; et
b) un trou traversant (41) aménagé sur le deuxième organe de verrouillage (30) qui fait face à la surface de pression (42),
**caractérisé en ce que** le deuxième élément de retenue (31) du deuxième organe de verrouillage (30) du mécanisme de verrouillage (10) comprend un bras de maintien.

2. Le conteneur apte à être ouvert selon la revendication 1, dans lequel le premier élément de maintien (39) comprend une surface d'arrêt qui est adaptée pour venir en appui contre une autre surface d'arrêt (29) correspondante présente sur le premier organe de verrouillage (20) pour verrouiller le couvercle.

3. Le conteneur apte à être ouvert selon la revendication 1, dans lequel le deuxième organe de verrouillage (30) comprend une surface (35) formant coin qui est adaptée pour coopérer avec une autre surface formant coin (25) correspondante présente sur le cantilever pour amener le cantilever à être déformé à partir de la position naturelle.

4. Un appareil électrique comprenant le conteneur apte à être ouvert selon l'une quelconque des revendications précédentes.
